# EUROPEAN PATENT SPECIFICATION

(11) **EP 4 283 200 B1**
(45) Date of publication and mention of the grant of the patent: **15.10.2025**
(21) Application number: 23170248.1
(22) Date of filing: 27.04.2023
(51) Int. Cl.: F24C 15/16, A47J 37/06, F24C 15/00, A21B 3/04, A21B 3/13

(54) **STEAM-GRILL ACCESSORY FOR A HOUSEHOLD BAKING OVEN**
DAMPF ODER GRILL ZUBEHÖR FÜR EINEN HAUSHALTSBACKOFEN
ACCESSOIRE DE GRILL OU VAPEUR POUR FOUR DE CUISSON DOMESTIQUE

(30) Priority: 24.05.2022 IT 202200010814
(43) Date of publication of application: 29.11.2023
(73) Proprietor: Candy S.p.A., 20861 Brugherio, Monza e Brianza (IT)
(72) Inventor: SCHREIBER, Daniel Bruno Josef, I-20861 Brugherio (IT); BOMBARDIERI, Chiara Marina, I-20861 Brugherio (IT); STRINATI, Alberto, I-20861 Brugherio (IT); DOYLE, John Piero, I-20861 Brugherio (IT)
(74) Representative: Leihkauf, Steffen Falk

(56) References cited:
- IT-U1- BA 970 011
- JP-A- 2000 130 770
- KR-B1- 102 152 534
- US-A1- 2007 295 224
- US-A1- 2010 126 358
- US-A1- 2020 297 162

## Description

The present invention relates to a steam-grill accessory for a household baking oven, to a steam-grill kit comprising the steam-grill accessory and a baking tray and to a household baking oven equipped with the steam-grill accessory and/or the steam-grill kit.

Household baking ovens usually comprise a housing with a cooking cavity, delimiting a cooking space therein for accommodating the food to be cooked. The cooking cavity has an access opening closable by means of a door hinged to the housing. The baking oven further comprises a heating system, e.g., one or more electric resistors arranged outside and/or inside the cooking cavity, in particular configured and controllable for specific cooking functions, such as cooking with or without ventilation, steam cooking, grill cooking, for example, (i.e., by means of intense heat from above), etc.

Household baking ovens further comprise a ventilation system with one or more recirculation and/or suction and/or cooling impellers, operable by electric motors, for remixing the air inside the cooking cavity, for aspirating and discharging cooking fumes and/or for cooling oven components, such as the door, for example.

The food subjected to cooking is supported from above on grills or baking trays arranged in the cooking cavity at selectable heights, e.g., in an insertable and removable manner by virtue of special guides present in the cooking cavity.

Known baking trays and grills (shelves in general) are typically at least roughly planar structures made of continuous sheet metal or they are structures made of metal mesh bars forming a planar grill with wide passage sections, or panels made of refractory stone, etc.

The food is directly placed on the shelves in the oven or arranged in special cooking containers, e.g., pans and terracotta pots.

To cook meats or vegetables by grilling, i.e., by exposure to an intense heat from above, it is desirable for the food to be surrounded, as much as possible, by air and not stick to an extensive continuous surface and for the liquids exiting the food to be removed to avoid a boiling effect. For this reason, for grilling it is known to place the food (meats, vegetables) directly on a planar mesh shelf. However, the cooking juices falling through the mesh accumulate and burn on the bottom surface of the cooking cavity, generating undesired combustion fumes.

For cooking vegetables and fish, for example, it is desirable instead to keep the food juicy and tender and avoid it from excessively drying out. However, this is in contrast with the high cooking temperatures and with the circulation of air inside the cooking cavity both aimed at distributing the heat and cooling the heat sensitive parts of the oven.

Again when cooking vegetables and fish, it is desirable to cook with minimum fat or without added fat, again avoiding the food from drying out while keeping it as wet and tender as possible.

Cooking with the aid of steam as a heat carrier is known, but not all household baking ovens are provided with a system for generating steam with their own water tank for this purpose.

Finally, depending on the type of cooking, it may be desirable to locally extend (meaning to stretch or lengthen) the food surface, e.g., of the meat and/or fish, to further expose it to the heat, ventilation, steam and/or contact with the bearing surface or, on the contrary, locally reduce (meaning to narrow or compress) the surface of the food, e.g., of the meat or fish, to expose it as little as possible to the heat, ventilation and/or contact with the bearing surface. To date, this is not possible without manually handling (pushing, extending, bending) the food before placing it in the oven. The state of the art forming a technological background for the present invention is represented by JP2000130770A, ITBA970011U1, KR102152534B1, US2020/297162A1, US210/126358A1, US2007/295224A1.

Therefore, it is the object of the present invention to provide a steam-grill accessory for a baking oven having features such as to obviate at least some of the drawbacks of the prior art.

It is a particular object of the invention to provide a steam-grill accessory for a baking oven which allows grilling, in particular meat, with a low generation of combustion fumes.

It is a further particular object of the invention to provide a steam-grill accessory for a baking oven which allows cooking, in particular meat, with the option of locally extending a surface of the food exposed to the heat and/or with local compression or narrowing of a surface of the food exposed, e.g., in contact with a bearing surface.

It is a further particular object of the invention to provide a steam-grill accessory for a baking oven which allows steam cooking, in particular fish or vegetables, with the reduced need to use added fats, and without any particular preparation of the oven for the steam cooking.

It is a further particular object of the invention to provide a steam-grill accessory for a baking oven which allows cooking, in particular fish and vegetables, with the option of locally extending a surface of the food exposed to the heat, steam or to a bearing and containment surface and/or with local compression or narrowing of a surface of the food exposed to ventilated regions to reduce the drying out thereof.

It is an even further object of the invention to provide a steam-grill accessory for a baking oven with the option of varying or switching the form of supporting the food.

It is an even further object of the invention to provide a steam-grill accessory for a baking oven which differently favors the circulation and distribution of heat around the food and removal of the cooking liquids from the food subjected to cooking.

It is an even further object of the invention to provide a steam-grill accessory for a baking oven which is compatible for use in combination with a traditional or standard planar oven baking tray forming a steam-grill kit for a baking oven having the above-listed functional advantages and features.

These and other objects are achieved by a steam-grill accessory for a household baking oven according to claim 1. The dependent claims relate to advantageous and preferred embodiments.

According to an aspect of the invention, a steam-grill accessory for a household baking oven comprises a support and containment body having:
- a food support wall formed on a first side of the steam-grill accessory provided with perforations or passage openings distributed on the extension thereof and having a peripheral edge, and
- at least two side walls opposite to each other, oriented transversely to the food support wall and connected to the food support wall along the peripheral edge,

where the opposite side walls form two free edges opposite to each other and facing away from the peripheral edge, said free edges extending along a second side of the steam-grill accessory opposite to the first side,
where the support body can be oriented in a first position or grilling position with the free edges facing (i.e., with the second side) upwards, where the food support wall (i.e., the first side) is arranged on a lower side of the steam-grill accessory and the steam-grill accessory can rest downwards by means of bearing portions of the food support wall,
where the support body can be oriented in a second position or steaming position, with the free edges (i.e., the second side) facing downwards, where the food support wall (i.e., the first side) is arranged on an upper side of the steam-grill accessory and the steam-grill accessory can rest downwards by means of the free edges of the side walls,
where the food support wall is three-dimensionally curved and forms:
   - at least two first apex regions in two positions opposite to each other with respect to a central position of the food support wall, extending towards the first side, and
   - a second apex region in the central position of the food support wall, extending towards the second side,
   - a first food support surface, which is as a whole concave and faces the first side,
   - a second food support surface, which is as a whole convex and faces the second side,
where the food support wall is spaced apart from a first bearing plane defined by the bearing portions, as well as from a second bearing plane defined by the free edges of the side walls.

This new form and configuration of the steam-grill accessory allows a use thereof in two different positions overturned by 180° respectively.

A first grilling position, in which the second convex food support surface faces upwards for advantageously supporting the meat or vegetables to be grilled, allowing drainage of the liquids through the perforation of the food support wall and collection in a traditional underlying baking tray (or a traditional baking tray on which the steam-grill accessory rests) and with the advantageous taut exposure of the upper food surface to the heat of the upper heating coil of the oven. "Taut exposure" is understood to mean the effect of extending the surface of the food due to the three-dimensional convex curvature of the second food support surface. The lower surface of the food, in contact with the food support wall, is slightly compressed and reduced instead with a partial closing effect of the pores, which reduces the loss of juices and adherence between the food and the second food support surface.

A second steaming position, in which the first concave food support surface faces upwards for advantageously supporting the vegetables or fish to be steam cooked, allowing the steam to access and to circulate through the perforation of the food support wall, where the steam can be easily generated by means of a simple remainder of water in a traditional underlying baking tray (or a traditional baking tray on which the steam-grill accessory rests) and with the advantageous support and containment of the vegetables or fish, exposing, to the steam, a lower taut surface of the food. Herein, "taut" is understood to mean the effect of extending the lower surface of the food due to the three-dimensional concave curvature of the first food support surface. The upper surface of the food, facing away from the source of steam, is slightly compressed and reduced instead with a partial closing effect of the pores, which reduces the loss of juices, humidity and heat, keeping the food tender and juicy.

According to a further aspect of the invention, a steam-grill accessory kit comprises the steam-grill accessory and a (traditional) baking tray for a household oven, having:
- a baking tray bottom wall,
- a baking tray side wall which connects to the baking tray bottom wall all around the baking tray bottom wall, and mutually forms, with the baking tray bottom wall, a baking tray containment space open upwards,
- a substantially rectangular baking tray edge formed along the baking tray side wall on an opposite side to the baking tray bottom wall,
where the steam-grill accessory is shaped and dimensioned so as to be partially insertable into the baking tray containment space and placeable on the baking tray bottom wall or hangable to the baking tray edge, both in the first position or grilling position and in the second position or steaming position, and where the baking tray containment space creates a collection compartment for cooking liquids and a water reserve compartment for generating steam.

This allows achieving all the advantages of the invention without needing to adapt the baking oven and therefore using pre-existing baking ovens.
The terminology "first position", "grilling position" defines the same state of orientation and positioning of the accessory, but not necessarily its operating state as a grilling device, since the accessory itself is only an accessory and does not generate grill heat and can be used with ovens which themselves have only a steam function or only a grill function or both steam and grill functions. Similarly, the terminology "second position", "steam/ing position", "steam cooking position" defines a same state of orientation and positioning of the accessory, but not necessarily its operating state as a steam device, since the accessory itself is only an accessory and does not generate steam and can be used with ovens which themselves have only a steam function or only a grill function or both steam and grill functions.

To better understand the invention and appreciate the advantages thereof, some non-limiting illustrative embodiments will be described below with reference to the drawings, in which:
figures 1 and 2 show perspective views from a first side (figure 2) and from a second side (figure 1) opposite to the first side of a steam-grill accessory for a household oven, according to an embodiment,
figures 3, 4, 5, 6, 7 show a plan view (figure 3), side views (figures 4, 6) and a sectional view along section planes V-V (figure 5) and VII-VII (figure 7) in figure 3 of the steam-grill accessory in figure 1,
figures 8 - 15 show a perspective view (figure 8), two sectional perspective views along two sectional planes orthogonal to each other (figures 9, 10), two side views (figures 12, 14) and two sectional side views along two sectional planes orthogonal to each other (figures 11, 13), as well as a plan view (figure 15) of an assembly of the steam-grill accessory and a baking tray for an oven in a first coupling/assembly configuration (grilling configuration or BBQ),
figures 16 - 23 show a perspective view (figure 16), two sectional perspective views along two sectional planes orthogonal to each other (figures 17, 18), two side views (figures 20, 22) and two sectional side views along two sectional planes orthogonal to each other (figures 19, 21), as well as a plan view (figure 23) of the assembly of the steam-grill accessory and the baking tray for an oven in a second coupling/assembly configuration (steam cooking configuration),

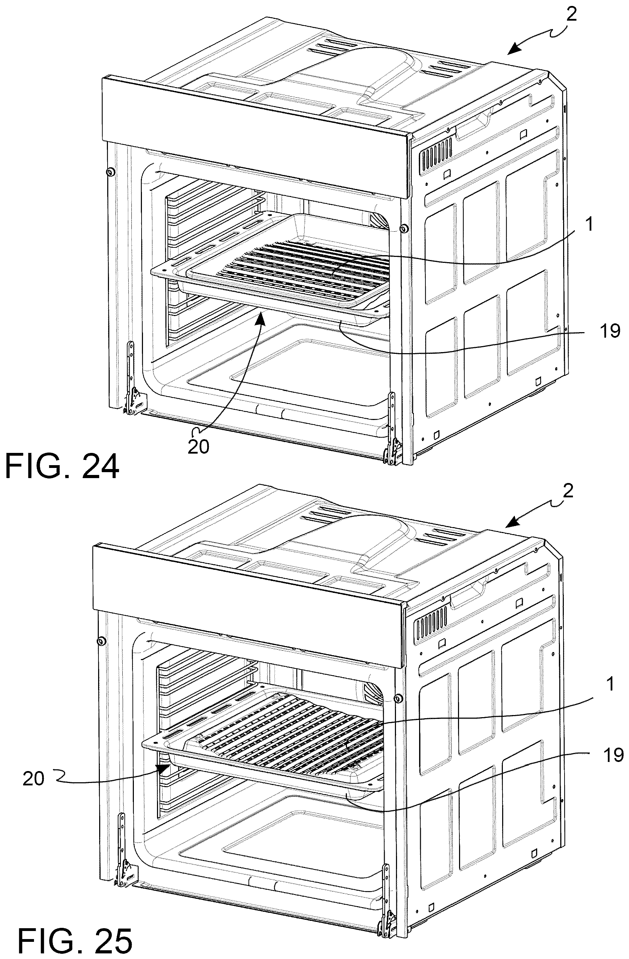

figures 24 and 25 show a baking oven with the steam-grill accessory in two different configurations.

With reference to the figures, a steam-grill accessory 1 for a baking oven 2, preferably a household baking oven, comprises a support and containment body 3, which can be made of:
- perforated sheet metal, preferably enameled or coated with PTFE or a layer of non-stick material, or
- a self-supporting shaped sheet of ceramic or synthetic material (e.g., fiber reinforced material) and resistant to temperatures of up to 250°C or within the range from 250°C to 400°C, or
- a metal mesh, preferably enameled or coated with PTFE or a layer of non-stick material.

The support and containment body 3 forms:
- a food support wall 4 formed on a first side 5 of the steam-grill accessory 1 and provided with perforations 6 or passage openings distributed on the extension thereof and having a peripheral edge 7, and
- at least two side walls 8 opposite to each other, oriented transversely to the food support wall 4 and connected to the food support wall 4 along the peripheral edge 7.

The opposite side walls 8 form two free edges 9 opposite to each other and facing away from the peripheral edge 7, said free edges 9 extending along a second side 10 of the steam-grill accessory 1 opposite to the first side 5.

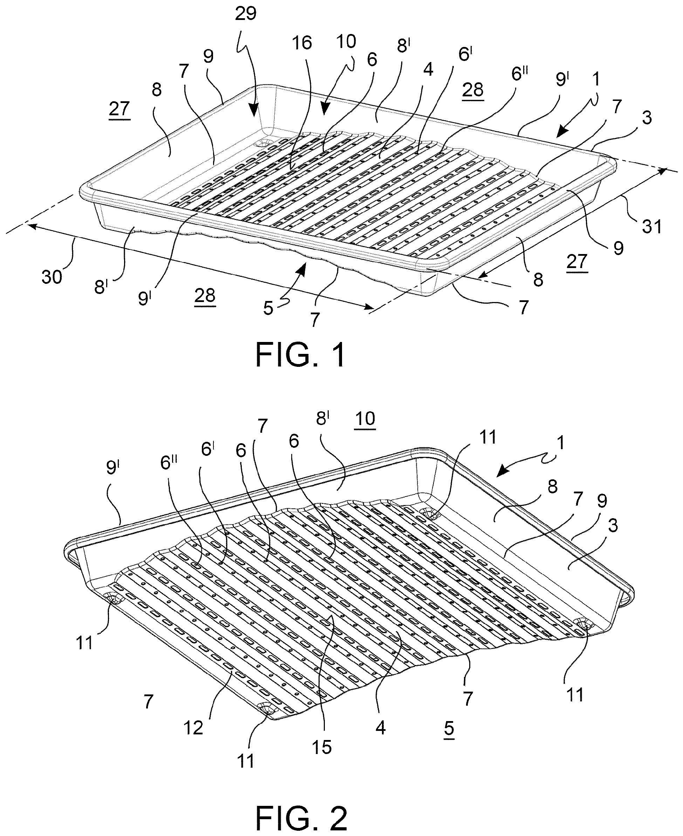

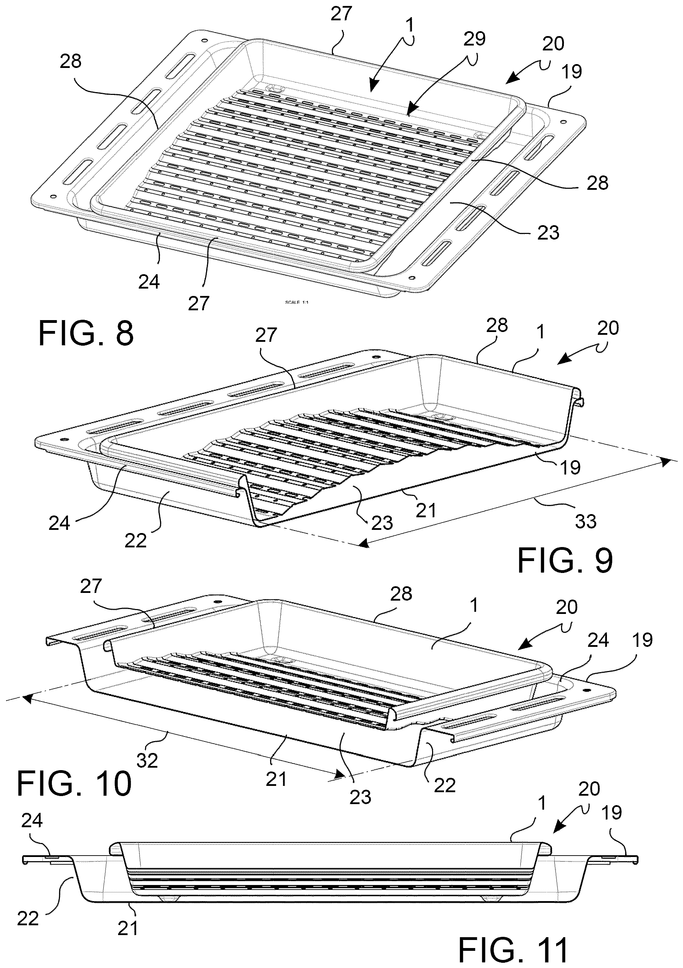

The support and containment body 3 can be oriented in a first position or grilling position **(****figures 1****,** **8****)** with the free edges 9 (i.e., with the second side 10) facing upwards, where the food support wall 4 (i.e., the first side 5) is arranged on a lower side of the steam-grill accessory 1 and the steam-grill accessory 1 can rest downwards by means of bearing portions 11 (extending from or at the food support wall 4.

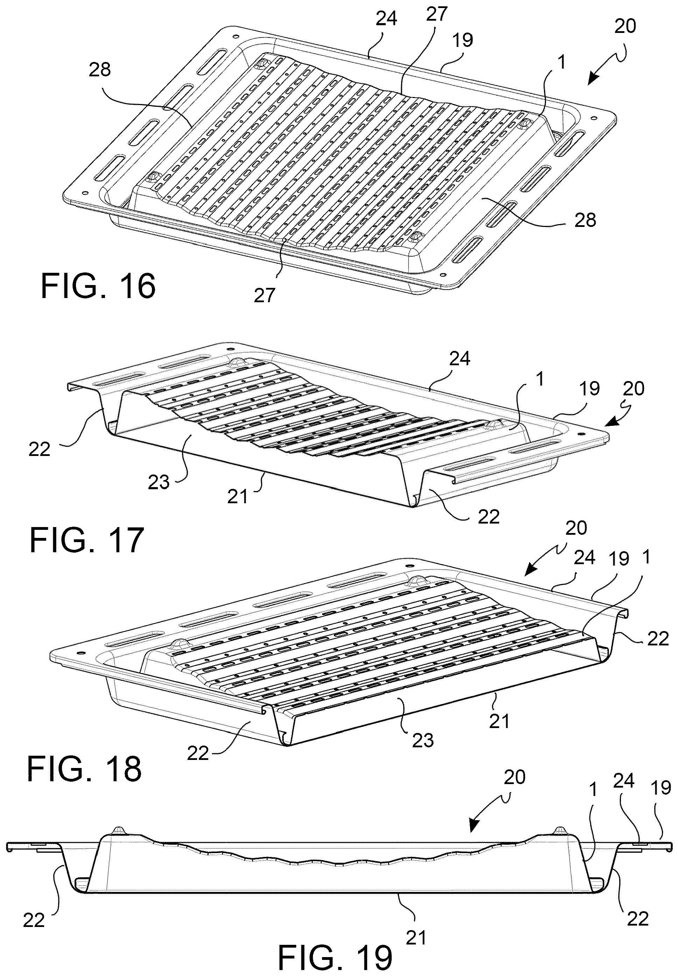

The support and containment body 3 can further be overturned and oriented in a second position or steaming position **(****figure 16****)** with the free edges 9 (i.e., the second side 10) facing downwards, where the food support wall 4 (i.e., the first side 5) is arranged on an upper side of the steam-grill accessory 1 and the steam-grill accessory 1 can rest downwards by means of the free edges 9 of the side walls 8.

The food support wall 4 is three-dimensionally curved and forms:
- at least two first apex regions 12 in two positions opposite to each other with respect to a central position 13 of the food support wall 4, extending towards the first side 5, and
- a second apex region 14 in the central position 13 of the food support wall 4, extending towards the second side 10,
- a first food support surface 15, which is as a whole concave and faces the first side 5,
- a second food support surface 16, which is as a whole convex and faces the second side 10.

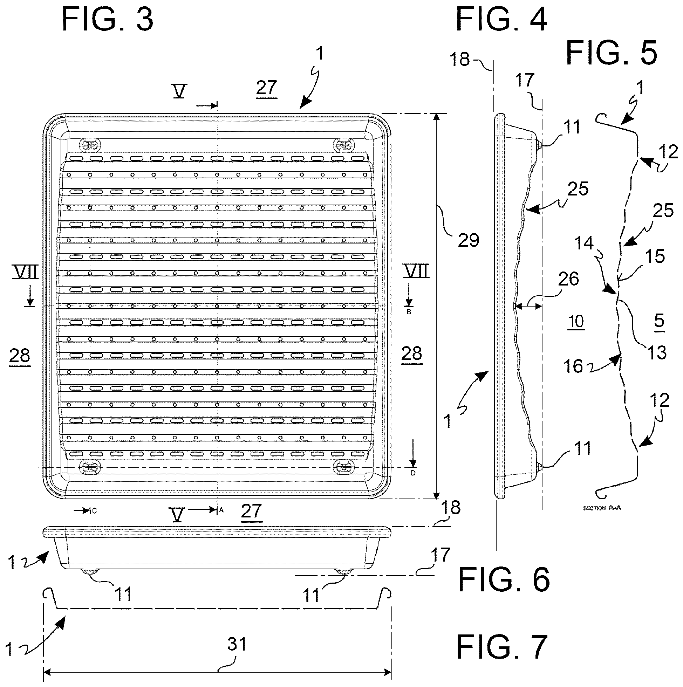

The food support wall 4 is spaced apart from a first bearing plane 17 defined by the bearing portions 11, as well as from a second bearing plane 18 defined by the free edges 9 of the side walls 8 **(****figures 4, 6****).**

Advantageously, the steam-grill accessory 1 can be used together with a baking tray 19 for a baking oven, forming a steam-grill kit 20.

The baking tray 19 forms a baking tray bottom wall 21, a baking tray side wall 22 which connects to the baking tray bottom wall 21 all around the baking tray bottom wall 21, where the baking tray side wall 22 forms, together with the baking tray bottom wall 21, a baking tray containment space 23 open upwards, a baking tray edge 24 which is substantially rectangular, formed along the baking tray side wall 22 on an opposite side to the baking tray bottom wall 21.

The steam-grill accessory 1 is shaped and dimensioned so as to be partially insertable into the baking tray containment space 23 and placeable on the baking tray bottom wall 21 and/or hangable onto the baking tray edge 24, both in the first position or grilling position **(****figures 9, 10****,** **13****)** and in the second position or steaming position (figures **17, 18****),** and where the baking tray containment space 23 creates a collection compartment for cooking liquids (in the first position or grilling position) and a water reserve compartment for generating steam (in the second position or steam cooking position).

According to an embodiment, in a longitudinal section plane (plane V-V in **figure 3****)** of the support and containment body 3, the food support wall 4 is as a whole shaped like an arc extending between the two first apex regions 12 forming the bases or "feet" of the arc and at which the bearing portions 11 are formed, while the vertex of the arc forms the second apex region 14.

In a cross-section plane (VII-VII plane in **figure 3****)** of the support and containment body 3, advantageously, the food support wall 4 has as a whole a linear shape so as to give the food support wall 4 a three-dimensional barrel vault shape.

Alternatively, in the cross-section plane (VII-VII plane in **figure 3****)** of the support and containment body 3, the food support wall 4 can have as a whole a curved shape so as to give the food support wall 4 a three-dimensional dome vault shape.

The term "as a whole" - shape means the general development of the food support wall 4 without considering only local shape features, such as the perforations and/or passage openings 6 and only local bends or undulations having dimensions in a smaller order of magnitude than the size of the described arc shape as a whole.

According to an embodiment, in the longitudinal section plane (plane V-V in figure 3) of the support and containment body 3, the food support wall 4 has a local undulation, e.g., a total from 5 to 15, preferably from 8 to 12 waves, for example sinusoidal or zigzag or with steps, where the oscillation width of the local undulation is less than 1/3, preferably less than 1/4 , even more preferably in the range from 1/5 and 1/15 of an arc height 26 **(****figure 4****)** of the food support wall 4.

This also favors the distribution and circulation of heat and steam on the food support side and reduces the sticking of the food on the first 15 and second 16 food support surfaces. Furthermore, the local undulation 25 stiffens the food support wall 4 and prevents undesired snap deformations (both thermal and during the handling of the accessory) typical of thin sheet metals bent in a vault- or dome-shape.

According to an embodiment, the perforation or passage openings 6 comprise:
- first passage openings 6', preferably round holes, formed in the first position or grilling position at the ridges of the local undulation 25 and, in the second position or steam cooking position, at the trough of the local undulation 25,
- second passage openings 6", preferably elongated slots, formed in the first position or grilling position at the trough of the local undulation 25 and, in the second position or steam cooking position, at the ridges of the local undulation 25,
while the slopes of the local undulation 25 between the trough and the ridge are preferably devoid of perforations.

More advantageously, the second passage openings 6" achieve a local permeability (ratio between the overall passage area and the total wall area) which is greater than the local permeability achieves by the first passage openings 6'.

These features of the perforation 6 contribute, in a targeted manner, to promoting the circulation of the steam in the second position or steam cooking position and reducing the accumulation of cooking liquid in the grilling position.

According to an embodiment, the bearing portions 11 are formed by four bosses protruding towards the first side 5 and formed by a press-operation in the sheet metal of the food support wall 4, preferably at, or adjacent to four corners of the support and containment body 3 which is rectangular in shape.

The two opposite side walls 8 extend along two opposite transverse sides 27 of the support and containment 3 body.

According to an embodiment, the support and containment body 3 forms two further side walls 8', 8' opposite to each other extending along two longitudinal sides 28 of the support and containment body 3, oriented transversely to the food support wall 4 and connected to the food support wall 4 along the peripheral edge 7 and further connected to the side walls 8 so as to form a continuous peripheral side wall all around the food support wall 4.

The food support wall 4 and the continuous peripheral side wall 8, 8' delimit an accessory containment compartment 29, facing and open upwards in the second position or steam cooking position **(****figure 1****)** in order to contain the food to be steam cooked even in a "heaped" manner, as is the case for example with the cooking of Brussels sprouts.

As a whole, the support and containment body 3 is substantially shaped like a rectangular tray, preferably with rounded corners.

The further opposite side walls 8' also form further free edges 9' opposite to each other and facing away from the peripheral edge 7, said further free edges 9' forming, together with the free edges 9, a continuous peripheral free edge all around the support and containment body 3.

The free edges 9, the further free edges 9', and therefore the continuous peripheral free edge formed therefrom advantageously consists of an end edge of sheet metal bent in a "C" shape towards the outside of the support and containment body 3.

This allows the steam-grill accessory 1 to be both placeable at the bottom by the bearing portions 11 and by the free edges 9, and hangable at the top to an edge of a baking tray by the free edges 9 or by the further free edges 9'.

According to an embodiment, the support and containment body 3 (and in particular a continuous peripheral free edge formed all around the support and containment body 3) has a greater longitudinal extension 30 in the extension direction of the longitudinal sides 28, i.e., of the further free edges 9', than a transverse extension 31 thereof in the extension direction of the transverse sides 27 i.e., of the free edges 9'.

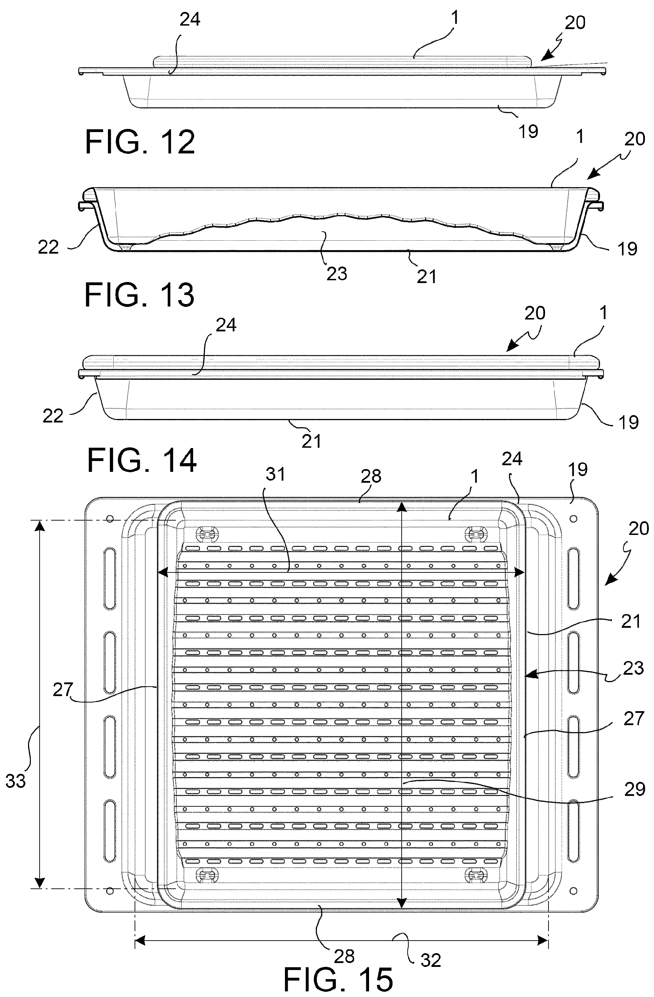

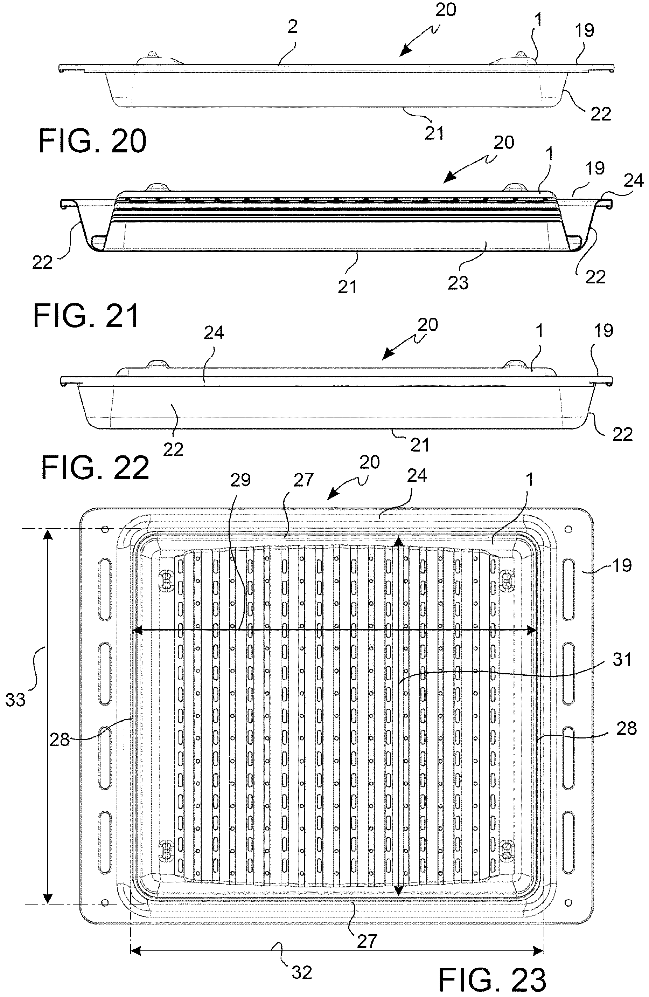

Advantageously, in a view from above, the baking tray containment space 23 of the baking tray 19 is substantially rectangular in shape, with a longitudinal containment extension 32 and a transverse containment extension 33 being orthogonal to and smaller than the longitudinal containment extension 32, where:
- the longitudinal extension 30 of the support and containment body 3 (and, in particular, of the peripheral free edge thereof) is smaller than the longitudinal containment extension 32 of the baking tray 19 but greater than the transverse containment extension 33 of the baking tray 19,
- the transverse extension 31 of the support and containment body 3 (and in particular of the peripheral free edge thereof) is smaller than the transverse containment extension 33 and the longitudinal containment extension 32 of the baking tray 19,

so as to insert the support and containment body 3 at least partially from above into the baking tray containment space, with both the longitudinal extension 30 parallel to the longitudinal containment extension 32 **(****figures 16****,** **23****)** and the longitudinal extension 30 orthogonal to the longitudinal containment extension 32 **(****figures 8****,** **15****),**
and where, preferably:
   - in an assembly of the kit with the longitudinal extension 30 orthogonal to the longitudinal containment extension 32 **(****figures 8****,** **15****),** the free edges 9 of the support and containment body 3 project beyond the transverse containment extension 33 of the baking tray containment space 23 and cannot be accommodated therein (in particular, in the grilling position, **figure 18****)** and
   - in an assembly of the kit with the longitudinal extension 30 parallel to the longitudinal containment extension 32 **(****figures 16****,** **23****),** the free edges 9 (and, if provided, also the further free edges 9') of the support and containment body 3 can be completely accommodated inside the baking tray containment space 23 (in particular in the second position or steam cooking position, **figure 16****).**

This facilitates the mutual insertion and detachment of the steam-grill accessory 1 with respect to the baking tray 19 in both the grilling and steam cooking positions, it allows water to be filled in the baking tray containment space 23 with the accessory 1 inserted in the second position or steam cooking position, and it allows hanging the accessory 1 on the upper baking tray edge 24 of the baking tray 19 in the case of a very deep baking tray 19.

The invention further relates to the household baking oven 2 provided with the steam-grill accessory 1 and/or the kit 20 of baking tray 19 and the steam-grill accessory 1.

### Reference numerals

1 steam-grill accessory
2 baking oven
3 support and containment body
4 food support wall
5 first side
6 perforations or passage openings
6' first passage openings
6" second passage openings
7 peripheral edge
8 opposite side walls
8' further opposite side walls
9 opposite free edges
9' further free edges
10 second side
11 bearing portions
12 two first apex regions
13 central position
14 second apex region
15 first food support surface
16 second food support surface
17 first bearing plane
18 second bearing plane
19 baking tray
20 steam-grill kit
21 baking tray bottom wall
22 baking tray side wall
23 baking tray containment space
24 baking tray edge
25 local undulation
26 arc height
27 transverse sides
28 longitudinal sides
29 accessory containment compartment
30 longitudinal extension
31 transverse extension
32 longitudinal containment extension
33 transverse containment extension

## Claims

1. A steam-grill accessory (1) for a baking oven (2), comprising a support and containment body (3) forming:
- a food support wall (4) formed on a first side (5) of the steam-grill accessory (1) having a peripheral edge (7), and
- at least two side walls (8) opposite to each other, oriented transversely to the food support wall (4) and connected to the food support wall (4) along the peripheral edge (7), wherein the opposite side walls (8) form two free edges (9) opposite to each other and facing away from the peripheral edge (7), said free edges (9) extending along a second side (10) of the steam-grill accessory (1) opposite to the first side (5),
wherein the support and containment body (3) can be oriented in a first position or grilling position with the second side (10) facing upwards and the food support wall (4) arranged on a lower side of the steam-grill accessory (1) and wherein the steam-grill accessory (1) can be abutted downwards by means of bearing portions (11) formed close to the food support wall (4),
wherein the support and containment body (3) can be overturned from the first position or grilling position to a second position or steaming position, with the second side (10) facing downwards and the food support wall (4) arranged on an upper side of the steam-grill accessory (1) and wherein the steam-grill accessory (1) abutted downwards by means of the free edges (9) of the side walls (8),
wherein the food support wall (4) is curved and forms:
- at least two first apex regions (12) in two positions opposite to each other with respect to a central position (13) of the food support wall (4), protruding towards the first side (5), and
- a second apex region (14) in the central position (13) of the food support wall (4), protruding towards the second side (10),
- a first food support surface (15), which is as a whole concave and faces the first side (5),
- a second food support surface (16), which is as a whole convex and faces the second side (10),
wherein the food support wall (4) is spaced apart from a first bearing plane (17) defined by the bearing portions (11), as well as from a second bearing plane (18) defined by the free edges (9) of the side walls (8),**characterized in that**
the food support wall (4) is provided with perforations (6) or passage openings distributed on the extension thereof.

2. A steam-grill accessory (1) according to claim 1, wherein, in a longitudinal section plane (V-V) of the support and containment body (3), the food support wall (4) is as a whole shaped like an arc extending between the two first apex regions (12) forming the bases of the arc and at which the bearing portions (11) are formed, and a vertex of the arc forms the second apex region (14).

3. A steam-grill accessory (1) according to claim 2, wherein in a cross-section plane (VII-VII) of the support and containment body (3), the food support wall (4) advantageously is as a whole linear in shape so as to give the food support wall (4) a three-dimensional barrel vault shape.

4. A steam-grill accessory (1) according to claim 2, wherein in a cross-section plane (VII-VII) of the support and containment body (3), the food support wall (4) is as a whole curved in shape so as to give the food support wall (4) a three-dimensional dome vault shape.

5. A steam-grill accessory (1) according to any one of the preceding claims, wherein the food support wall (4) has a local undulation (25) with an oscillation width of the local undulation (25) less than 1/3, or less than 1/4 or in the range from 1/5 to 1/15 of an arc height (26) of the food support wall (4).

6. A steam-grill accessory (1) according to claim 5, wherein the perforation (6) comprises:
- first passage openings (6') formed in the first position or grilling position at the ridges of the local undulation (25) and, in the second position or steam cooking position, at the trough of the local undulation (25),
- second passage openings (6") formed in the first position or grilling position at the trough of the local undulation (25) and, in the second position or steam cooking position, at the ridges of the local undulation (25),
wherein the slopes of the local undulation (25) between the trough and the ridge are preferably devoid of perforations.

7. A steam-grill accessory (1) according to claim 6, wherein the second passage openings (6") provide a greater local permeability than the local permeability provided by the first passage openings (6').

8. A steam-grill accessory (1) according to any one of the preceding claims, wherein the bearing portions (11) consist of four bosses protruding towards the first side (5) and formed by a press-operation in the sheet metal of the food support wall (4).

9. A steam-grill accessory (1) according to any one of the preceding claims, wherein the two opposite side walls (8) extend along two opposite transverse sides (27) of the support and containment body (3) and the support and containment body (3) forms two further side walls (8', 8') opposite to each other extending along two longitudinal sides (28) of the support and containment body (3) and connected to the food support wall (4) along the peripheral edge (7) and further connected to the side walls (8) so as to form a continuous peripheral side wall all around the food support wall (4),
wherein the food support wall (4) and the continuous peripheral side wall (8, 8') delimit an accessory containment space (29) facing and open upwards in the second position or steam cooking position.

10. A steam-grill accessory (1) according to any one of the preceding claims, consisting of a single metal sheet which is enameled or has an external non-stick coating.

11. A steam-grill kit (20) comprising the steam-grill accessory (1) according to any one of the preceding claims and a baking tray (19) for a baking oven (2), wherein:
- the baking tray (19) forms a baking tray bottom wall (21), a baking tray side wall (22), which connects to the baking tray bottom wall (21) all around the baking tray bottom wall (21), a substantially rectangular baking tray edge (24) formed along the baking tray side wall (22) on an opposite side with respect to the baking tray bottom wall (21),
- the baking tray side wall (22) forms, together with the baking tray bottom wall (21), a baking tray containment space (23) open upwards,
- the steam-grill accessory (1) is shaped and dimensioned so as to be insertable, at least partially, into the baking tray containment space (23), in both the first position or grilling position and the second position or steaming position,
- the baking tray containment space (23) forms a compartment for collecting cooking liquids and stocking water for the steam generation.

12. A steam-grill kit (20) according to claim 11, wherein:
- the support and containment body (3) has a longitudinal extension (30) greater than a transverse extension (31) thereof,
- in a top view, the baking tray containment space (23) of the baking tray (19) is substantially rectangular in shape, with a longitudinal containment extension (32) and a transverse containment extension (33) being orthogonal to and smaller than the longitudinal containment extension (32), wherein:
- the longitudinal extension (30) of the support and containment body (3) is smaller than the longitudinal containment extension (32) of the baking tray (19) but greater than the transverse containment extension (33) of the baking tray (19),
- the transverse extension (31) of the support and containment body (3) is smaller than the transverse containment extension (32) and smaller than the longitudinal containment extension (33) of the baking tray (19),
- the support and containment body (3) is at least partially insertable from the top into the baking tray containment space, with both the longitudinal extension (30) parallel to the longitudinal containment extension (32) and the longitudinal extension (30) orthogonal to the longitudinal containment extension (32),
- in an assembly of the steam-grill kit (20) with the longitudinal extension (30) orthogonal to the longitudinal containment extension (32), the free edges (9) of the support and containment body (3) project beyond the transverse containment extension (33) of the baking tray containment space (23) and cannot be accommodated therein, and
- in an assembly of the kit with the longitudinal extension (30) parallel to the longitudinal containment extension (32), the free edges (9) of the support and containment body (3) are completely accommodated inside the baking tray containment space (23).

13. A domestic baking oven (2) comprising the steam-grill accessory (1) and/or the kit (20) of baking tray (19) and steam-grill accessory (1) according to any of the preceding claims.

## Patentansprüche

1. Dampf- oder Grillzubehör (1) für einen Haushaltsbackofen (2), umfassend einen Stütz- und Aufnahmekörper (3), der bildet:
- eine Lebensmittelstützwand (4), die auf einer ersten Seite (5) des Dampf-Grillzubehörs (1) aufweisend einen Umfangsrand (7) ausgebildet ist, und
mindestens zwei einander gegenüberliegende Seitenwände (8), die quer zu der Lebensmittelstützwand (4) ausgerichtet sind und mit der Lebensmittelstützwand (4) entlang des Umfangsrandes (7) verbunden sind, wobei die gegenüberliegenden Seitenwände (8) zwei einander gegenüberliegende freie Ränder (9) bilden, die von dem Umfangsrand (7) abgewandt sind, wobei die freien Ränder (9) sich entlang einer zweiten Seite (10) des Dampf-Grillzubehörs (1) erstrecken, die der ersten Seite (5) gegenüberliegt,
wobei der Stütz- und Aufnahmekörper (3) in einer ersten Position oder Grillposition mit der zweiten Seite (10), die nach oben zugewandt ist und der Lebensmittelstützwand (4) an einer Unterseite des Dampf-Grillzubehörs (1) angeordnet ist, ausgerichtet werden kann und wobei das Dampf-Grillzubehör (1) mittels Tragabschnitte (11), die in der Nähe der Lebensmittelstützwand (4) ausgebildet sind, nach unten abgestützt werden kann,
wobei der Stütz- und Aufnahmekörper (3) von der ersten Position oder Grillposition in eine zweite Position oder Dampfposition umgekehrt werden kann, mit der zweiten Seite (10), die nach unten zugewandt ist und der Lebensmittelstützwand (4) an einer Oberseite des Dampf-Grillzubehörs (1) angeordnet ist, und wobei das Dampf-Grillzubehör (1) mittels der freien Ränder (9) der Seitenwände (8) nach unten abgestützt wird,
wobei die Lebensmittelstützwand (4) gekrümmt ist und bildet:
- mindestens zwei erste Scheitelbereiche (12) in zwei einander gegenüberliegenden Positionen in Bezug auf eine Mittelposition (13) der Lebensmittelstützwand (4), die zu der ersten Seite (5) vorstehen, und
- einen zweiten Scheitelbereich (14) in der Mittelposition (13) der Lebensmittelstützwand (4), der zu der zweiten Seite (10) vorsteht,
- eine erste Lebensmittelstützfläche (15), die insgesamt konkav ausgebildet ist und der ersten Seite (5) zugewandt ist,
- eine zweite Lebensmittelstützfläche (16), die insgesamt konvex ausgebildet ist und der zweiten Seite (10) zugewandt ist,
wobei die Lebensmittelstützwand (4) von einer ersten Tragebene (17), die durch die Tragabschnitte (11) definiert wird, sowie von einer zweiten Tragebene (18), die durch die freien Ränder (9) der Seitenwände (8) definiert wird, beabstandet ist, **dadurch gekennzeichnet, dass** die Lebensmittelstützwand (4) mit Bohrungen (6) oder Durchgangsöffnungen versehen ist, die über ihre gesamte Erstreckung verteilt sind.

2. Dampf- oder Grillzubehör (1) nach Anspruch 1, wobei in einer Längsabschnittebene (V-V) des Stütz- und Aufnahmekörpers (3) die Lebensmittelstützwand (4) insgesamt bogenförmig ausgebildet ist, wobei sich der Bogen zwischen den zwei Scheitelbereichen (12) erstreckt, die die Basen des Bogens bilden, an denen die Tragabschnitte (11) ausgebildet sind, und ein Scheitel des Bogens den zweiten Scheitelbereich (14) bildet.

3. Dampf- oder Grillzubehör (1) nach Anspruch 2, wobei in einer Querabschnittebene (VII-VII) des Stütz- und Aufnahmekörpers (3) die Lebensmittelstützwand (4) vorzugsweise insgesamt linearförmig ausgebildet ist, um der Lebensmittelstützwand (4) eine dreidimensionale Tonnengewölbegestalt zu verleihen.

4. Dampf- oder Grillzubehör (1) nach Anspruch 2, wobei in einer Querabschnittebene (VII-VII) des Stütz- und Aufnahmekörpers (3) die Lebensmittelstützwand (4) insgesamt gekrümmt ausgebildet ist, um der Lebensmittelstützwand (4) eine dreidimensionale Kuppelgewölbegestalt zu verleihen.

5. Dampf- oder Grillzubehör (1) nach einem der vorhergehenden Ansprüche, wobei die Lebensmittelstützwand (4) eine lokale Wellenbildung (25) mit einer Schwingungsbreite der lokalen Wellenbildung (25) aufweist, die kleiner als 1/3, oder kleiner als 1/4 oder im Bereich von 1/5 bis 1/15 einer Bogenhöhe (26) der Lebensmittelstützwand (4) ist.

6. Dampf- oder Grillzubehör (1) nach Anspruch 5, wobei die Bohrung (6) umfasst:
- erste Durchgangsöffnungen (6'), die in der ersten Position oder Grillposition an den Spitzen der lokalen Wellenbildung (25) und in der zweiten Position oder Dampfposition an den Hohlräumen der lokalen Wellenbildung (25) ausgebildet sind,
- zweite Durchgangsöffnungen (6"), die in der ersten Position oder Grillposition an Hohlräumen der lokalen Wellenbildung (25) und in der zweiten Position oder Dampfposition an den Spitzen der lokalen Wellenbildung (25) ausgebildet sind,
wobei die geneigten Bereiche der lokalen Wellenbildung (25) zwischen Hohlraum und Spitze vorzugsweise ohne Bohrungen sind.

7. Dampf- oder Grillzubehör (1) nach Anspruch 6, wobei die zweiten Durchgangsöffnungen (6") eine höhere lokale Durchlässigkeit als die lokale Durchlässigkeit bieten, die durch die ersten Durchgangsöffnungen (6') bereitgestellt wird.

8. Dampf- oder Grillzubehör (1) nach einem der vorhergehenden Ansprüche, wobei die Tragabschnitte (11) aus vier Vorsprüngen bestehen, die zu der ersten Seite (5) vorstehen und durch einen Pressvorgang in dem Blech der Lebensmittelstützwand (4) ausgebildet sind.

9. Dampf- oder Grillzubehör (1) nach einem der vorhergehenden Ansprüche, wobei sich die beiden gegenüberliegenden Seitenwände (8) entlang zwei gegenüberliegender Querseiten (27) des Stütz- und Aufnahmekörpers (3) erstrecken und wobei der Stütz- und Aufnahmekörper (3) zwei weitere einander gegenüberliegende Seitenwände (8', 8') bildet, die sich entlang zwei Längsseiten (28) des Stütz- und Aufnahmekörpers (3) erstrecken und mit der Lebensmittelstützwand (4) entlang des Umfangsrandes (7) sowie mit den Seitenwänden (8) verbunden sind, um eine durchgehende Umfangsseitenwand um die Lebensmittelstützwand (4) zu bilden.
wobei die Lebensmittelstützwand (4) und die durchgehende Umfangsseitenwand (8, 8') einen Zubehör-Aufnahmeraum (29) begrenzen, der in der zweiten Position oder Dampfposition nach oben zugewandt ist und offen ist.

10. Dampf- oder Grillzubehör (1) nach einem der vorhergehenden Ansprüche, bestehend aus einem einzigen Blech, das emailliert wird oder eine äußere Antihaftbeschichtung aufweist.

11. Dampf- oder Grillset (20), umfassend das Dampf- oder Grillzubehör (1) nach einem der vorhergehenden Ansprüche und ein Backblech (19) für einen Backofen (2), wobei:
- das Backblech (19) eine Backblechbodenwand (21), eine Backblechseitenwand (22), die sich mit der Backblechbodenwand (21) rund um die Backblechbodenwand (21) verbindet, und einen im Wesentlichen rechteckigen Backblechrand (24) aufweist, der entlang der Backblechseitenwand (22) auf einer Seite, die der Backblechbodenwand (21) gegenüberliegt, ausgebildet ist,
- die Backblechseitenwand (22), zusammen mit der Backblechbodenwand (21), einen Backblech-Aufnahmeraum (23) bildet, der nach oben offen ist,
- das Dampf- oder Grillzubehör (1) ausgebildet und dimensioniert wird, sodass mindestens teilweise in den Backblech-Aufnahmeraum (23) einsetzbar ist, sowohl in der ersten Position oder Grillposition als auch in der zweiten Position oder Dampfposition,
- der Backblech-Aufnahmeraum (23) ein Fach zum Sammeln Kochflüssigkeiten und zum Speichern Wasser für die Dampferzeugung bildet.

12. Dampf- oder Grillset (20) nach Anspruch 11, wobei:
- der Stütz- und Aufnahmekörper (3) eine Längserstreckung (30) aufweist, die größer als seine Quererstreckung (31) ist,
- der Backblech-Aufnahmeraum (23) des Backblechs (19) in einer Draufsicht im Wesentlichen rechteckig ist, mit einer Längsaufnahmeerstreckung (32) und einer Queraufnahmeerstreckung (33), die orthogonal zu der Längsaufnahmeerstreckung (32) und kleiner als diese ist, wobei:
- die Längserstreckung (30) des Stütz- und Aufnahmekörpers (3) kleiner als die Längsaufnahmeerstreckung (32) des Backblechs (19), aber größer als die Queraufnahmeerstreckung (33) des Backblechs (19) ist,
- die Quererstreckung (31) des Stütz- und Aufnahmekörpers (3) kleiner als die Queraufnahmeerstreckung (33) und kleiner als die Längsaufnahmeerstreckung (32) des Backblechs (19) ist,
- der Stütz- und Aufnahmekörper (3) mindestens teilweise von oben in den Backblech-Aufnahmeraum einsetzbar ist, sowohl mit der Längserstreckung (30) parallel zu der Längsaufnahmeerstreckung (32) als auch mit der Längserstreckung (30) orthogonal zu der Längsaufnahmeerstreckung (32),
- bei einer Montage des Dampf- oder Grill-Sets (20) mit der Längserstreckung (30) orthogonal zu der Längsaufnahmeerstreckung (32) die freien Ränder (9) des Stütz- und Aufnahmekörpers (3) über die Queraufnahmeerstreckung (33) des Backblech-Aufnahmeraums (23) hinausragen und nicht darin aufgenommen werden können, und
- bei einer Montage des Sets mit der Längserstreckung (30) parallel zu der Längsaufnahmeerstreckung (32) die freien Ränder (9) des Stütz- und Aufnahmekörpers (3) vollständig innerhalb des Backblech-Aufnahmeraums (23) aufgenommen sind.

13. Haushaltsbackofen (2), umfassend das Dampf- oder Grillzubehör (1) und/oder das Set (20) bestehend aus Backblech (19) und Dampf- oder Grillzubehör (1) nach einem der vorhergehenden Ansprüche.

## Revendications

1. Accessoire de cuisson à la vapeur et de grillage (1) pour un four de cuisson domestique (2), comprenant un corps de support et de confinement (3) formant :
- une paroi de support des aliments (4) formée sur un premier côté (5) de l'accessoire vapeur-grill (1) ayant un bord périphérique (7), et
au moins deux parois latérales (8) opposées l'une à l'autre, orientées transversalement à la paroi de support des aliments (4) et reliées à la paroi de support des aliments (4) le long du bord périphérique (7),
les parois latérales opposées (8) formant deux bords libres (9) opposés l'un à l'autre et orientés à l'opposé du bord périphérique (7), lesdits bords libres (9) s'étendant le long d'un second côté (10) de l'accessoire vapeur-grill (1) opposé au premier côté (5),
le corps de support et de confinement (3) pouvant être orienté dans une première position ou position de grillage avec le second côté (10) orienté vers le haut et la paroi de support des aliments (4) disposée sur un côté inférieur de l'accessoire vapeur-grill (1) et l'accessoire vapeur-grill (1) pouvant être appuyé vers le bas au moyen de parties d'appui (11) formées à proximité de la paroi de support des aliments (4),
le corps de support et de confinement (3) pouvant être renversé de la première position ou position de grillage vers une seconde position ou position de cuisson à la vapeur, avec le second côté (10) orienté vers le bas et la paroi de support des aliments (4) disposée sur un côté supérieur de l'accessoire vapeur-grill (1) et l'accessoire vapeur-grill (1) pouvant être appuyé vers le bas au moyen des bords libres (9) des parois latérales (8),
la paroi de support des aliments (4) étant courbée et formant :
- au moins deux premières zones d'apex (12) en deux positions opposées l'une à l'autre par rapport à une position centrale (13) de la paroi de support des aliments (4), faisant saillie vers le premier côté (5), et
- une seconde zone d'apex (14) dans la position centrale (13) de la paroi de support des aliments (4), faisant saillie vers le second côté (10),
- une première surface de support des aliments (15), globalement concave et orientée vers le premier côté (5),
- une seconde surface de support des aliments (16), globalement convexe et orientée vers le second côté (10),
la paroi de support des aliments (4) étant espacée d'un premier plan d'appui (17) défini par les parties d'appui (11), ainsi que d'un second plan d'appui (18) défini par les bords libres (9) des parois latérales (8),
**caractérisé en ce que** la paroi de support des aliments (4) est munie de perforations (6) ou d'ouvertures de passage réparties sur son extension.

2. Accessoire de vapeur-grill (1) selon la revendication 1, dans lequel, dans un plan de section longitudinale (V-V) du corps de support et de confinement (3), la paroi de support des aliments (4) est globalement en forme d'arc s'étendant entre les deux premières zones d'apex (12) formant les bases de l'arc et au niveau desquelles sont formées les parties d'appui (11), et un sommet de l'arc forme la seconde zone d'apex (14).

3. Accessoire de vapeur-grill (1) selon la revendication 2, dans lequel, dans un plan de section transversale (VII-VII) du corps de support et de confinement (3), la paroi de support des aliments (4) est avantageusement globalement linéaire de manière à conférer à la paroi de support des aliments (4) une forme de voûte en berceau tridimensionnelle.

4. Accessoire de vapeur-grill (1) selon la revendication 2, dans lequel, dans un plan de section transversale (VII-VII) du corps de support et de confinement (3), la paroi de support des aliments (4) est globalement courbe de manière à conférer à la paroi de support des aliments (4) une forme de voûte en dôme tridimensionnelle.

5. Accessoire de vapeur-grill (1) selon l'une quelconque des revendications précédentes, dans lequel la paroi de support des aliments (4) présente une ondulation locale (25) avec une largeur d'oscillation de l'ondulation locale (25) inférieure à 1/3, ou inférieure à 1/4 ou comprise entre 1/5 et 1/15 d'une hauteur d'arc (26) de la paroi de support des aliments (4).

6. Accessoire de vapeur-grill (1) selon la revendication 5, dans lequel la perforation (6) comprend :
- des premières ouvertures de passage (6') formées, dans la première position ou position de grillage, au niveau des crêtes de l'ondulation locale (25) et, dans la seconde position ou position de cuisson à la vapeur, au niveau des creux de l'ondulation locale (25),
- des secondes ouvertures de passage (6") formées, dans la première position ou position de grillage, au niveau des creux de l'ondulation locale (25) et, dans la seconde position ou position de cuisson à la vapeur, au niveau des crêtes de l'ondulation locale (25),
les pentes de l'ondulation locale (25) entre le creux et la crête étant de préférence dépourvues de perforations.

7. Accessoire de vapeur-grill (1) selon la revendication 6, dans lequel les secondes ouvertures de passage (6") offrent une perméabilité locale supérieure à la perméabilité locale fournie par les premières ouvertures de passage (6').

8. Accessoire de vapeur-grill (1) selon l'une quelconque des revendications précédentes, dans lequel les parties d'appui (11) sont constituées de quatre bossages faisant saillie vers le premier côté (5) et formés par une opération de pressage dans la tôle métallique de la paroi de support des aliments (4).

9. Accessoire de vapeur-grill (1) selon l'une quelconque des revendications précédentes, dans lequel les deux parois latérales opposées (8) s'étendent le long de deux côtés transversaux opposés (27) du corps de support et de confinement (3) et le corps de support et de confinement (3) forme deux autres parois latérales opposées (8', 8') s'étendant le long de deux côtés longitudinaux (28) du corps de support et de confinement (3) et reliées à la paroi de support des aliments (4) le long du bord périphérique (7) et en outre reliées aux parois latérales (8) de manière à former une paroi latérale périphérique continue tout autour de la paroi de support des aliments (4),
la paroi de support des aliments (4) et la paroi latérale périphérique continue (8, 8') délimitant un espace de confinement d'accessoire (29) orienté et ouvert vers le haut dans la seconde position ou position de cuisson à la vapeur.

10. Accessoire de vapeur-grill (1) selon l'une quelconque des revendications précédentes, constitué d'une seule tôle métallique émaillée ou présentant un revêtement antiadhésif externe.

11. Kit vapeur-grill (20) comprenant l'accessoire vapeur-grill (1) selon l'une quelconque des revendications précédentes et un plateau de cuisson (19) pour un four de cuisson domestique (2), dans lequel :
- le plateau de cuisson (19) forme une paroi inférieure de plateau de cuisson (21), une paroi latérale de plateau de cuisson (22), laquelle est reliée à la paroi inférieure de plateau de cuisson (21) tout autour de la paroi inférieure de plateau de cuisson (21) et un bord de plateau de cuisson (24) sensiblement rectangulaire formé le long de la paroi latérale de plateau de cuisson (22) du côté opposé à la paroi inférieure de plateau de cuisson (21),
- la paroi latérale de plateau de cuisson (22) forme, avec la paroi inférieure de plateau de cuisson (21), un espace de confinement du plateau de cuisson (23) ouvert vers le haut,
- l'accessoire vapeur-grill (1) est formé et dimensionné de manière à pouvoir être inséré, au moins partiellement, dans l'espace de confinement du plateau de cuisson (23), aussi bien dans la première position ou position de grillage que dans la seconde position ou position de cuisson à la vapeur,
- l'espace de confinement du plateau de cuisson (23) forme un compartiment pour recueillir les liquides de cuisson et stocker de l'eau pour la génération de vapeur.

12. Kit vapeur-grill (20) selon la revendication 11, dans lequel :
- le corps de support et de confinement (3) présente une extension longitudinale (30) supérieure à son extension transversale (31),
- en vue de dessus, l'espace de confinement (23) du plateau de cuisson (19) est sensiblement rectangulaire, avec une extension longitudinale de confinement (32) et une extension transversale de confinement (33) orthogonale et inférieure à l'extension longitudinale de confinement (32), dans lequel :
- l'extension longitudinale (30) du corps de support et de confinement (3) est inférieure à l'extension longitudinale de confinement (32) du plateau de cuisson (19) mais supérieure à l'extension transversale de confinement (33) du plateau de cuisson (19),
- l'extension transversale (31) du corps de support et de confinement (3) est inférieure à l'extension transversale de confinement (32) et inférieure à l'extension longitudinale de confinement (33) du plateau de cuisson (19),
- le corps de support et de confinement (3) peut être inséré au moins partiellement par le haut dans l'espace de confinement du plateau de cuisson, aussi bien avec l'extension longitudinale (30) parallèle à l'extension longitudinale de confinement (32) qu'avec **l'extension** longitudinale (30) orthogonale à **l'extension** longitudinale de confinement (32),
- dans un assemblage du kit vapeur-grill (20) avec **l'extension** longitudinale (30) orthogonale à l'extension longitudinale de confinement (32), les bords libres (9) du corps de support et de confinement (3) dépassent au-delà de **l'extension** transversale de confinement (33) de l'espace de confinement du plateau de cuisson (23) et ne peuvent pas y être logés, et
- dans un assemblage du kit avec l'extension longitudinale (30) parallèle à l'extension longitudinale de confinement (32), les bords libres (9) du corps de support et de confinement (3) sont entièrement logés à l'intérieur de l'espace de confinement du plateau de cuisson (23).

13. Four de cuisson domestique (2) comprenant l'accessoire vapeur-grill (1) et/ou le kit (20) de plateau de cuisson (19) et d'accessoire vapeur-grill (1) selon l'une quelconque des revendications précédentes.
